# EUROPEAN PATENT APPLICATION

(11) **EP 2 009 146 A1**
(43) Date of publication of application: **31.12.2008**
(21) Application number: 07388046.0
(22) Date of filing: 22.06.2007
(51) Int. Cl.: C25D 3/60, C25D 5/48, C23F 1/30, H01M 4/38, H01M 4/98, H05B 3/00

(54) **A microporous coating or structure and a process for producing it**

(71) Applicant: Danmarks Tekniske Universitet - DTU, 2800 Kongens Lyngby (DK)
(72) Inventor: Tang, Peter Torben, 2860 Søborg (DE); Arentoft, Mogens, 4000 Roskilde (DE); Bay, Niels, 2765 Smørum (DE); Borrild, Morten Jerne, 2100 København Ø (DE); Mizushima, Io, 2800 Kongens Lyngby (DE)
(74) Representative: Christensen, Bent

(57) **Abstract**

A microporous coating or structure is established as a thin metallic layer by deposition of one or more alloys on a metallic substrate, each of said alloys consisting of two or more phases, one of which can be selectively dissolved in a solution that will not significantly attack the other phase or phases. Such microporous coatings or structures are useful in the production of various product types, such as fuel cells, catalysts, microfilters, heat exchangers, micro-components and heat transfer devices.

## Description

### Technical Field

The present invention relates to a microporous coating or structure established as a thin metallic layer by deposition of one or more alloys on a metallic substrate, each of said alloys consisting of two or more phases, one of which can be selectively dissolved in a solution that will not significantly attack the other phase or phases. The present invention also relates to a process for producing said microporous coating or structure. Moreover, the invention relates to the use of said microporous coating or structure for the production of a variety of product types, such as fuel cells, catalysts, microfilters, heat exchangers and heat transfer devices.

### Background

In connection with metal forming, such as cold forging of steel components, it is essential to secure an adequate and reliable lubrication in order to reduce friction and to avoid galling. A thorough lubrication is crucial in metal forming to obtain products having a satisfactory quality.

The tribological conditions in cold forming of metals range from difficult to extremely severe due to large surface expansion and normal pressure in the tool/workpiece interface combined with elevated tool temperatures. With the exception of the most simple cold forming operations, a successful production therefore requires the use of advanced lubrication systems to reduce friction and avoid galling. Such lubrication systems can be based on microporous coatings, cf. the co-pending application No. xxx.

However, metal forming such as cold forging of steel components only constitute one of several possible uses of microporous coatings or structures deposited as thin metallic films on the surface of metallic substrates. Such microporous coatings or structures are useful in the production of various product types, such as fuel cells, catalysts, microfilters, heat exchangers, micro-components and heat transfer devices.

According to the invention a microporous coating or structure produced by deposition of one or more alloys on a metallic substrate is obtained. The porosity of said coating can be controlled by carefully controlling the alloy composition, and the large surface areas created can be used for various purposes. Especially micro-components such as microfilters and small versions of fuel cells, heat exchangers etc. would be very effective if they are made this way.

### Disclosure of the Invention

The aspect of the invention is a microporous coating or structure produced by deposition of one or more alloys on a metallic substrate, each of said alloys consisting of two or more phases, one of which can be selectively dissolved in a solution that will not significantly attack the other phase or phases.

Preferably the two or more metallic phases are characterised by having different chemical compositions, grain sizes (metallurgical microstructures) or crystallographic parameters, such as atomic lattice constant or texture (crystallographic orientation).

GB patent No. 1 487 485 describes a method of forming a catalytic layer suitable for use as an electrode. Said method comprises placing a layer of a homogeneous alloy on a substrate, said alloy consisting of a first component comprising at least one metal selected among Ru, Rh, Pd, Os, Ir and Pt, a second component comprising at least one metal selected from Fe, Co and Ni, the alloy initially comprising at least 65 at.% of the second component, and removing said second component from the alloy to form the desired catalytic layer. The platinum group metals may be doped with B, Si, Ti, Zr, Nb, Ta, Mo and/or W or Cu and/or Au. The removal of the inactive second component is achieved by etching the alloy with HNO₃, H₂SO₄ or HCl at room temperature to form the microporous catalyst layer. Alternatively the inactive component is removed electrochemically. In one modification of the process a Pt/Ni foil is sintered to each side of a Pt foil, the Pt/Ni foils then being treated to form the catalyst layers. The electrodes may be used in fuel cells, in which glucose is oxidized to provide power for operating an artificial heart, or in methanol/air fuel cells.

According to this GB patent, the alloy is preferably in the form of a foil which is sintered or welded on to one or both sides of the substrate. The alloy may, however, also be applied by plasma spraying.

The alloys used in the above GB patent are different from the alloys used according to the present invention. Moreover, the catalytic layer in the GB patent is not produced by electrodeposition.

### Detailed description of the Invention

As already mentioned, the present invention relates to a microporous coating or structure established as a thin metallic layer by deposition of one or more alloys on a metallic substrate, each of said alloys consisting of two or more phases, one of which can be selectively dissolved in a solution that will not significantly attack the other phase or phases, and thereby be removed.

In the microporous coating or structure the two or more metallic phases are characterised by having different chemical compositions, grain sizes (metallurgical microstructures) or crystallographic parameters, such as atomic lattice constant or texture (crystallographic orientation). The alloy(s) is/are deposited on the metallic substrate by electrochemical deposition.

In a preferred embodiment the microporous coating or structure is an electrodeposited material in the form of a binary metallic alloy consisting of metals that
(a) are essentially insoluble in each other or
(b) do not form intermetallic phases at temperatures below 200 °C.

In the above electrodeposited material the binary metallic alloy under (a) is preferably selected from the group consisting of FeIn, SnZn, AgCo, AgBi, AgFe, AgNi, InZn, BiCo, BiCu, BiSn and BiZn. Further, the binary metallic alloy under (b) is preferably selected from the group consisting of PdCu, PdCo, CoCu, AgCu, AuCu and AuCo.

The present invention also relates to a process for producing a microporous coating or structure on a metallic substrate, wherein the following steps are carried out:
(1) selecting one or more alloys, each consisting of two or more phases, the alloying elements of which are capable of providing a thin metallic film consisting of fine grains rather than a solid solution,
(2) electrochemically depositing the alloy(s) on the metallic substrate,
(3) optionally adding a layer of the substrate metal on top of the alloy layer and
(4) selectively removing one of the metals or phases by chemical etching,
leaving a microporous layer on the substrate surface.

In the above process the electrochemically deposited alloy(s) is/are preferably selected among the alloys FeIn, SnZn, AgCo, AgBi, AgFe, AgNi, InZn, BiCo, BiCu, BiSn, BiZn, PdCu, PdCo, CoCu, AgCu, AuCu and AuCo as mentioned above.

The chemical etching in the process according to the invention is carried out by means of a solution dissolving the selected metallic phase, said solution being a concentrated or diluted inorganic acid, organic acid, inorganic base, organic base or mixtures thereof. An especially preferred solution is diluted hydrochloric acid, but other acids, bases and mixtures thereof can also be used.

In a preferred embodiment of the process the electrochemically deposited alloy is SnZn and the chemical etching of the Zn phase is carried out with diluted hydrochloric acid. It is especially preferred that a layer of the substrate metal is added on top of the SnZn layer prior to etching. Thereby a metal tube with a microporous inner structure is obtained.

If for example a copper wire is covered with deposited SnZn and subsequently more copper is deposited on top of the SnZn layer, whereafter the Zn is etched out, then a co-axial wire with a porous layer between the Cu-core and the Cu-clad layer is obtained. This will be more useful for a catalyst than a coating.

As mentioned, the microporous coating or structure according to the invention for the production of a variety of product types, such as fuel cells, catalysts, microfilters, heat exchangers and heat transfer devices.

## Claims

1. A microporous coating or structure produced by deposition of an alloy on a metallic substrate, said alloy consisting of two or more phases, one of which can be selectively dissolved in a solution that will not significantly attack the other phase or phases.

2. The coating or structure according to claim 1, wherein the two or more metallic phases are **characterised by** having different chemical compositions, grain sizes (metallurgical microstructures) or crystallographic parameters, such as atomic lattice constant or texture (crystallographic orientation).

3. The coating or structure according to claim 1, wherein the alloy has been deposited on the metallic substrate by electrochemical deposition.

4. The coating or structure according to claim 3, which is an electrodeposited material in the form of a binary metallic alloy consisting of metals that
(a) are essentially insoluble in each other or
(b) do not form intermetallic phases at temperatures below 200 °C.

5. The material according to claim 4, wherein the binary metallic alloy under (a) is selected from the group consisting of Feln, SnZn, AgCo, AgBi, AgFe, AgNi, InZn, BiCo, BiCu, BiSn and BiZn.

6. The material according to claim 4, wherein the binary metallic alloy under (b) is selected from the group consisting of PdCu, PdCo, CoCu, AgCu, AuCu and AuCo.

7. A process for producing a microporous coating or structure according to any of the preceding claims on a metallic substrate, wherein the following steps are carried out:
(1) selecting one or more alloys, each consisting of two or more phases, the alloying elements of which are capable of providing a thin metallic film consisting of fine grains rather than a solid solution,
(2) electrochemically depositing the alloy(s) on the metallic substrate,
(3) optionally adding a layer of the substrate metal on top of the alloy layer and
(4) selectively removing one of the metals or phases by chemical etching,
leaving a microporous layer on the substrate surface.

8. The process according to claim 7, wherein the electrochemically deposited alloy is selected among Feln, SnZn, AgCo, AgBi, AgFe, AgNi, InZn, BiCo, BiCu, BiSn, BiZn, PdCu, PdCo, CoCu, AgCu, AuCu and AuCo.

9. The process according to claim 8, wherein the electrochemically deposited alloy is SnZn.

10. The process according to any of the claims 7 - 9, wherein the chemical etching is carried out by means of a solution dissolving the selected metallic phase, said solution being a concentrated or diluted inorganic acid, organic acid, inorganic base, organic base or mixtures thereof.

11. The process according to any of the claims 7 - 10, wherein the electrochemically deposited alloy is SnZn and the chemical etching of the Zn phase is carried out with diluted hydrochloric acid.

12. The process according to claim 11, wherein a layer of the substrate metal is added on top of the SnZn layer prior to etching to obtain a metal tube with a microporous inner structure.

13. The use of a microporous coating or structure according to any of the claims 1 - 6 for the production of fuel cells.

14. The use of a microporous coating according to any of the claims 1 - 6 for the production of catalysts.

15. The use of a microporous coating according to any of the claims 1 - 6 for the production of microfilters.

16. The use of a microporous coating according to any of the claims 1 - 6 for the production of heat exchangers and heat transfer devices.
